(19) Europäisches Patentamt

European Patent Office

Office européen des brevets

(11) **EP 3 382 490 B1**

(12) **EUROPEAN PATENT SPECIFICATION**

(45) Date of publication and mention
of the grant of the patent:
**03.05.2023 Bulletin 2023/18**

(21) Application number: **17164100.4**

(22) Date of filing: **31.03.2017**

(51) International Patent Classification (IPC):
**G05D 23/19** *(2006.01)*    **F24D 19/10** *(2006.01)*
**F24F 11/00** *(2018.01)*    **F24F 11/85** *(2018.01)*

(52) Cooperative Patent Classification (CPC):
**G05D 23/1934; F24D 19/1009; F24F 11/85;**
F24D 2220/042; F25B 2339/047; F25B 2600/13;
Y02B 30/70

(54) **METHOD FOR CONTROLLING A HYDRONIC HEATING SYSTEM IN MULTIPLE ROOMS**

VERFAHREN ZUR STEUERUNG EINES HYDRONISCHEN HEIZSYSTEMS IN MEHREREN
RÄUMEN

PROCÉDÉ POUR COMMANDER UN SYSTÈME DE CHAUFFAGE HYDRONIQUE DANS
PLUSIEURS PIÈCES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.10.2018 Bulletin 2018/40**

(73) Proprietors:
• **Mitsubishi Electric R&D Centre Europe B.V.
Livingston EH54 5DJ (GB)**
Designated Contracting States:
**GB**
• **Mitsubishi Electric Corporation
Tokyo 100-8310 (JP)**
Designated Contracting States:
**AL AT BE BG CH CY CZ DE DK EE ES FI FR GR
HR HU IE IS IT LI LT LU LV MC MK MT NL NO PL
PT RO RS SE SI SK SM TR**

(72) Inventor: **Uno, Yoshitaka
Livingston, EH54 5DJ (GB)**

(74) Representative: **Pfenning, Meinig & Partner mbB
Patent- und Rechtsanwälte
Theresienhöhe 11a
80339 München (DE)**

(56) References cited:
**EP-A1- 2 896 895     DE-A1- 4 414 260
DE-A1- 19 710 853**

## Description

In hydronic heating systems, in particular in Europe, several thermostats are often set in a house for space heating and more than two types of heat emitters are often installed in a house. The heating system normally controls a supply heat transport medium temperature based on a temperature measured by the thermostat to keep the room temperature in the room where the thermostat is installed at a set value.

In the prior art, for example in EP 2 466 220 A1 a heating control method is suggested where a set temperature determining device determines a target water temperature based on a current outflow temperature, inlet and outlet temperature difference, indoor and outdoor temperature difference and a set temperature difference. The indoor and outdoor temperature difference is a difference between an indoor temperature and an outdoor temperature, the inlet and outlet temperature difference is a difference between temperatures of water at the inlet side and the outlet side of an intermediate heat exchanger, and the set temperature difference is a difference between an indoor temperature and a set temperature. In this method a temperature of a representative room is treated as the indoor temperature. The representative room may be a room in which the difference between a set temperature and an indoor temperature is largest.

If the water temperature is determined based on a representative room where the difference between a set temperature and an indoor temperature is largest this is advantageous for heating up the room quickly. However, in the case where the representative room has an emitter which has the fastest responsiveness of a change of the heat emitted towards the indoor environment in response to the change of the outflow temperature into the heat exchanger, the water temperature and the temperature of the other rooms are frequently changed. This impairs the thermal comfort and the stability of the heating system.

In EP 2896895 A1 a method for adaptively controlling a heating system is disclosed. According to the disclosed method the controlling of the temperature of different rooms is based on duty cycles.

It is therefore an object of the present invention to improve the thermal comfort and the stability of the heating system.

The object is solved by the method for controlling a hydronic heating system according to claim 1 and the hydronic heating system according to claim 9.

The method of the present invention is a method for controlling a hydronic heating system. Such hydronic heating system has at least two indoor units which are installed in different rooms. Furthermore, the system has a thermostat installed in each of the different rooms in which one of the at least two indoor units is installed. Thus, if there are n rooms involved in the heating system, that is n rooms have an indoor unit, there are at least n thermostats, wherein the thermostat i is installed in a room i with $1 \leq i \leq n$. It should be noted that rooms not having any indoor unit are not taken into account here.

The thermostat i can measure the temperature in the corresponding room i in which the thermostat i is installed.

A temperature of a heat transport medium flowing in the hydronic heating system or which the hydronic heating system is adapted to conduct is controlled based on a temperature measured by that thermostat which is installed in that room of the different rooms, in which the indoor unit having the slowest responsiveness is installed. Thus, if there are n thermostats installed in n different rooms wherein in each of the n rooms an indoor unit is installed, and if one of these indoor units j in the room j in which the temperature is measured by a thermostat j has the slowest responsiveness, the temperature of the heat transport medium of the hydronic heating system is controlled based on a temperature measured by the thermostat j installed in the room j.

The meaning of "responsiveness" is the speed of response of a surface temperature of the indoor unit in response to a change of the temperature of the heat transport medium. When the temperature of the heat transport medium increases, the surface temperature and the heat emitted to the room increase rapidly if the indoor unit has a fast responsiveness. On the other hand, if the indoor unit has a slow responsiveness, the surface temperature and the heat emitted to the room increase slowly in response to the same temperature change of the heat transport medium. Thus, the responsiveness can be defined as the time which the surface temperature of the indoor unit needs to raise or decrease by a certain temperature if the temperature of the heat transport medium is increased or decreased by a certain temperature. It should be pointed out that for the present invention it is not necessary to determine the specific numerical value of the responsiveness. It is rather sufficient to determine or to know which indoor unit has the slowest responsiveness. For common indoor units this is usually known. For example, a floor heating coil has a slower responsiveness than a radiator, and a radiator has a slower responsiveness than a fan coil unit. Therefore, if there is a floor heater, a thermostat in the room with the floor heater is the thermostat on which the temperature of the heat transport medium is controlled. If there is no floor heater and there is a radiator the heat transport medium temperature is controlled based on the thermostat in the room with the radiator. If there are two or more emitters of the same type still the thermostat of the indoor unit with the slowest responsiveness is chosen to control the temperature of the heat transport medium.

An advantageous possibility to control the temperature of the heat transport medium can be by adapting an operation frequency of a heat pump heating or cooling the heat transport medium and/or by adapting an operation frequency of a circulation pump pumping the heat transport medium through the heat transport medium cycle.

In an advantageous embodiment a memory can store the value of the responsiveness of the indoor unit having the slowest responsiveness out of the different indoor units in the different rooms. The operation frequency of the heat pump heating or cooling the heat transport medium and/or the operation frequency of the circulation pump transporting the heat transport medium can be controlled based on this responsiveness.

For ecah type of indoor unit, numerical values of the responsiveness can be prepared by the manufacturer. To obtain the values, i.e. a time constant and a time delay, response tests between the temperature of the heat transport medium and the surface temperature (the heat emitted to the room) can be carried out.

Advantageously, the operation frequency of the heat pump and/or the operation frequency of the circulation pump can be controlled using PI control.

PI control can be represented by formula (X) including a control variable in the current control cycle and the previous, an error between a desired setpoint and a measured process variable in the current control cycle and the previous, and the correction coefficients:

$$u_t = u_{t-1} + K_P(e_t - e_{t-1}) + K_I e_t \qquad (X)$$

where, $u_t$ is a control variable, $e_t$ is an error value, $t$ is the current control cycle, $t-1$ is the previous control cycle, $K_P$ is the proportional correction coefficient, and $K_I$ is the integral correction coefficient.

The correction coefficients are, for example, the time constant of the indoor unit response which may be a calculated value from the data, such as target response time constant, and a control period. The correction coefficients may be previously registered by a manufacture (manual setting).

For example, in the case of using PI control for the operation frequency of the heat pump, the control variable is the frequency of the heat pump and the error value is the between the set and the current temperature of the heat transport medium .

In a preferred embodiment of the invention the indoor unit having the slowest responsiveness can be determined by measurement. For this a temperature of the heat transport medium and a surface temperature of each of the indoor unit is measured at a plurality of times. If the temperature of the heat transport medium changes, the responsiveness can be determined as or based on the time which the surface temperature of the indoor unit needs to change by a certain temperature difference. Thus, the responsiveness can be calculated based on the measured temperatures of the heat transport medium and the surface temperatures of the indoor units. The indoor unit having the slowest responsiveness can then be calculated based on the calculated responsivenesses.

The heat transport medium temperature is controlled to be a standard heat transport medium temperature, the standard heat transport medium temperature being adjusted using PI control based on that thermostat installed in the room in which the indoor unit has the slowest responsiveness.

The standard heat transport medium is calculated as follows:
A required heat transport medium temperature $T_{w,i}$ is calculated for each thermostat i as

$$T_{w,i} = \alpha_i \left(T_{set,i} - T_a\right) + T_{dset,i}$$

wherein

$$\alpha_i = \left(T_{dw,i} - T_{dset,i}\right)/\left(T_{dset,i} - T_{da}\right)$$

where

$T_{dw,i}$ is a predefined design heat transport medium temperature of the indoor unit corresponding to thermostat i,

$T_{dset,i}$ is a standard set room temperature in the room of thermostat i,

$T_{da}$ is a predetermined lowest ambient temperature,

$T_{set,i}$ is a set room temperature in the room of thermostat i and

$T_a$ is an ambient temperature.

Then in case of heating the rooms a maximum of the required heat transport medium temperatures $T_{w,i}$ and in case of cooling the rooms a minimum of the required heat transport medium temperatures $T_{w,i}$ is defined from all i as the standard heat transport medium temperature.

The predefined design heat transport medium temperature of the indoor unit is a standard heat transport medium temperature which is required to provide the heating capacity for which the indoor unit is designed. The design heat transport medium temperature is therefore a property of the indoor unit. The standard set room temperature is a standard temperature which for example can be determined by the user's preference or following the European standards. The predetermined lowest ambient temperature $T_{da}$ is usually the temperature which is defined when the house is built and is therefore the lowest temperature which should occur in the house.

Preferably the heat transport medium can for example be water, glycol or mineral oil.

The indoor units can for example be heat emitters or coolers. The indoor units may be one or more radiators, one or more floor heaters and/or one or more fan coil units.

A typical hydronic heating system may for example comprise a heat pump unit and a water circuit. The heat pump unit transfers heat from or to the water in the water circuit. Usually a circulation pump is provided in the water circuit in order to circulate the water. The water flows through heat emitters like for example radiators, floor heaters and/or fan coil units, which exchange heat with the room in which they are installed. Water temperature sensors are usually provided to measure a supply and a return water temperature. Furthermore, one or more ambient temperatures are usually present, measuring the room temperature.

According to the present invention there are at least two rooms. Each of the plurality of rooms come in sets, each set comprising a room, a thermostat and a heat emitter. The water temperature can then be controlled based on the temperature measured by the thermostat in the set in which the heat emitter having the slowest responsiveness is present. The temperature can for example be controlled based on an operation frequency of the heat pump and/or the circulation pump.

In an optional embodiment the controller carrying out the control method can be initialized as follows. For the initialization the following inputs can be determined. A person installing the system or a user may input the data when the heating system is installed. If necessary, the data can be modified after the initialization. The following inputs are examples in case of heating. The setting in the case of cooling can be done in an analogous way.

As an overall input the number of thermostats can be determined and input. This can be the number of thermostat installed in the house. For each set comprising a thermostat, a room and a heat emitter, the following quantities can be determined: The type of the heat emitter, which for example can be selected from the types radiator, fan coil unit and floor heater. If there are two or more heat emitters of the same type the installing person or the user can choose the heat emitter having the slowest responsiveness of the change of the heat emitted.

After the initialization the following data may optionally be produced from the input described above. Every time a person installing the system or a user modifies the input mentioned above after initialization this process may be repeated. Here, the thermostat may be judged in the room having the heat emitter with the slowest responsiveness of the change of the heat emitted. The responsiveness is slower in the following order: Floor heater, radiator, fan coil unit. Thus, if there is a floor heater, a thermostat with a floor heater is the thermostat based on which the control is carried out. If there are no floor heaters and there is a radiator, the thermostat with the radiator is the thermostat based on which the control is carried out. If there are two or more emitters of a type, the person installing the thermostat or the user can choose which is the slowest responsiveness in the type.

In the following the present invention shall be described by way of examples based on some figures.

It is shown in

Fig. 1    An operation of an example of the control method,

Fig. 2    a diagram showing the responsivenesses of different emitters,

Fig. 3    a flow chart for adjusting the water temperature,

Fig. 4    a flow chart for calculating a standard water temperature,

Fig. 5    an example of inputs when initializing the method of invention, and

Fig. 6    a diagram showing the required water temperature and the function of the difference between the set room temperature and the ambient temperature.

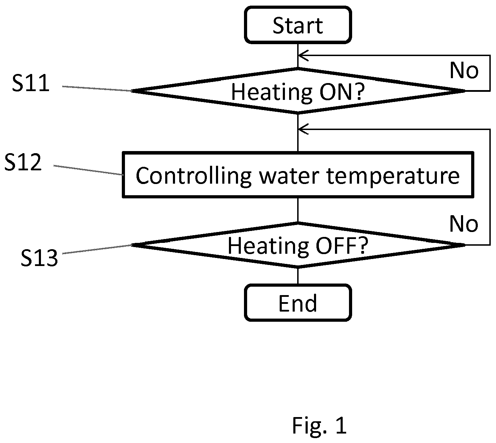

Fig. 1 shows an example of an operation of a heat pump using the method according to the present invention. In this example the following steps may be repeated each time interval while the heating system is in operation. In a first step S11 it is determined whether the heating is on. If the heating is on, the water temperature is controlled in step S12 based on the thermostat in the room having the heat emitter with the slowest responsiveness of the change of the heat emitted towards the indoor environment in response to the change of the outflow temperature of the heat transport medium. This control is repeated as long as the heating is on (step S13). The control method may for example be PI control. The parameters for PI control may be prepared for each type of emitter. Based on the determined temperature the heat pump and the circulation pump can be controlled to satisfy the determined water temperature.

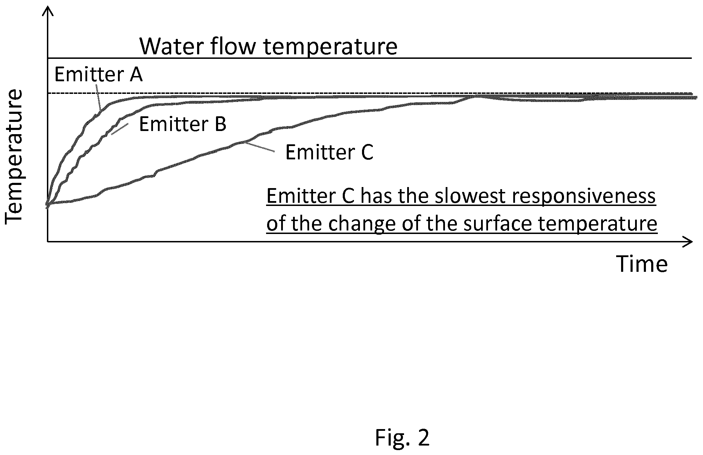

In order to judge the thermostat in the room having the indoor unit with the slowest responsiveness of the change of heat emitted an alternative method may for example be as follows. In a first step the water flow temperature and the surface temperature of each indoor unit can be determined from time to time. Based on these quantities, the responsivenesses of the change of the temperature of all indoor units can be compared. The room having the indoor unit with the slowest responsiveness of the change of the surface temperature is then the room having the indoor unit with the slowest responsiveness of the change of the heat emitted. This can be seen as an example in Fig. 2. There is an emitter A, an emitter B and an emitter C as indoor units. In the very beginning the temperature of the heat transport medium is increased. The lines shown represent the surface temperature of the indoor units A, B and C. It can be seen that the surface temperature of indoor unit A increases fastest while the surface temperature of indoor unit C increases slowest. Indoor unit C has therefore the slowest responsiveness.

The water temperature can in an alternative method also optionally be determined as follows. Instead of deciding the water temperature only based on the thermostat in the room having the heat emitter with the slowest responsiveness of the change of the heat emitted towards the indoor environment in response to the change of the outdoor temperature, the water temperature can also be decided based on a combination of a standard water temperature and an adjustment water temperature. The standard water temperature can in the case of heating be a maximum required water temperature among all the thermostats and in case of cooling be a minimum required water temperature among all these thermostats. The adjustment water temperature can then be determined based on the thermostat in the room having the heat emitter with the slowest responsiveness of the change of the heat emitted towards the room in response to the change of the outflow water temperature.

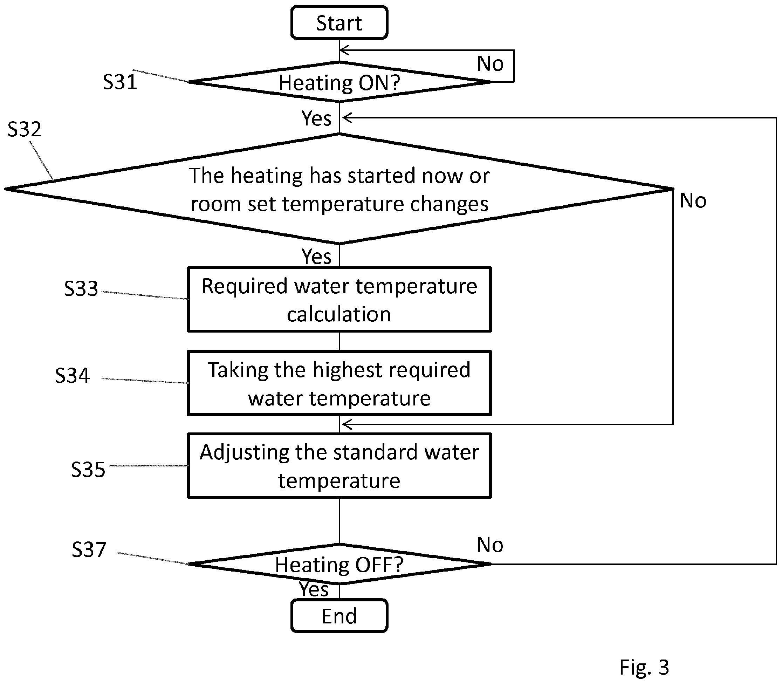

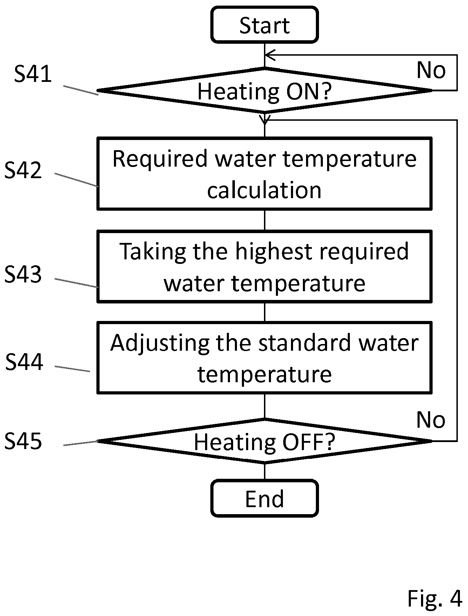

The standard water temperature and the adjustment water temperature are then defined. There are basically two different alternatives, in the first of which the standard water temperature may be used only when the heating/cooling starts or when a room set temperature changes. This alternative is shown in the flow diagram of Fig. 3. Alternatively, the standard water temperature can be employed every control interval as shown in Fig. 4.

In the method shown in Fig. 3 it is determined first in step S31 whether the heating is on. If the heating is on, it is decided in step S32 whether the heating has just started or the room set temperature changes. If this is not the case, then adjusting water temperature S35 is used for determining the operation of the heat pump and/or the circulation pump. On the other hand, if the heating has just started or the set room temperature changes, the required water temperature can be calculated in step S33. The highest required water temperature is then taken in step S34 and in step S35 the standard water temperature is adjusted. This method is carried out as long as the heating is on which is determined in step S37.

In the alternative example shown in Fig. 4 it is at first determined whether the heating is operational in step S41. If so, the required water temperature is calculated in step S42. Then the highest required water temperature is taken in step S43, and in step S44 the standard water temperature is adjusted. This is carried out as long as the heating is on (S45).

The standard water temperature can be calculated for example as follows. In an initialization the following input is input into the heating system. An installing person or user may input the data when the heating system is installed. The data can be modified after initialization. Here the example is given for the case of heating but for the case of cooling the setting is done in an analogous way.

As an overall input the lowest ambient temperature is input which may be a design lowest ambient temperature or a value which an installing person or a user defines. Furthermore, the number of thermostats is input which is installed in the house.

For each set comprising a thermostat, a room and a indoor unit, the following inputs can be provided:

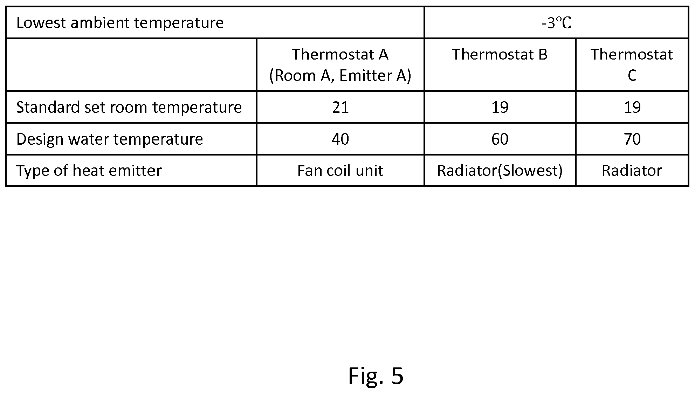

A standard set room temperature which may be a standard set room temperature for a room defined by installers and users, a design water temperature, which may be the design water temperature of the indoor unit or the value which the installing person or user defines and the type of indoor unit which can for example be selected from radiator, fan coil unit and floor heater. If there are two or more indoor units of the same type, an installing person or user can choose which has the slowest responsiveness of the change of the heat emitted. Fig. 5 shows an example of these inputs.

After the initialization, the following data are calculated from the input above. Every time an installer or user modifies the input above after the initialization, this process can also be done.

- Coefficients for required water temperature calculation:

    • Coefficient $\alpha_i$ is calculated in formula (1).

$$\alpha_i = \frac{T_{dw,i} - T_{dset,i}}{T_{dset,i} - T_{da}} \quad (1)$$

    where $T_{dw,i}$ is the design water temperature, $T_{dset,i}$ is the standard set room temperature, and $T_{da}$ is the lowest ambient temperature.

- Judge the thermostat in the room having the indoor unit with the slowest responsiveness of the change of the heat emitted

    • The responsiveness is slower in the following order, floor heater, radiator, fan coil unit. Therefore, if there is a floor heater, a thermostat with a floor heat is the thermostat. If there are no floor heaters and there is a radiator, a thermostat with a radiator is the thermostat. If there are two or more emitters of a type and installer or users do not choose which has the slowest responsiveness in the type, a thermostat with an emitter having the lowest design water temperature may be the slowest responsiveness in the type.

The operation may be as follows:
The controller repeats the following steps each time interval while heating is on (Figure 3 or 4).

    1. Calculate required water temperature for each thermostat based on the heat emitter's characteristic, the relationship between required water temperature and outdoor/indoor temperature difference, in the room having the thermostat

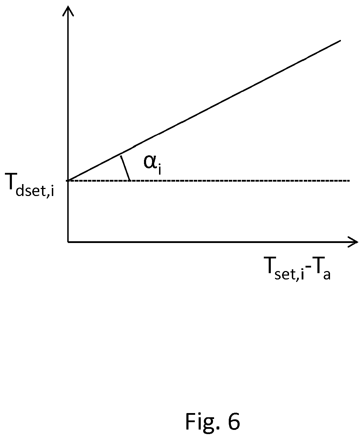

    • Required water temperature is calculated in formula (2) (Figure 6).

$$T_{w,I} = \alpha_i(T_{set,i} - T_a) + T_{dset,i} \quad (2)$$

where, $T_{w,i}$ is the required water temperature, $T_{set,i}$ is the set room temperature and $T_a$ is ambient temperature.

2. Take the highest required water temperature in heating and the lowest in cooling as standard water temperature.

3. Adjust the standard water temperature based on the thermostat in the room having the heat emitter with the slowest responsiveness of the change of the heat emitted toward the indoor environment for the change of the outflow temperature.

- The standard water temperature is adjusted based on the thermostat. The adjustment method may be PI control. The parameters for PI control may be prepared for each type of emitter.

4. Control the heat pump and the circulation pump to satisfy the water temperature.

**Claims**

1. Method for controlling a hydronic heating system,

   the hydronic heating system having at least two indoor units which are installed in different rooms, a thermostat being installed in each of the different rooms,
   wherein
   a temperature of a heat transport medium of the hydronic heating system is controlled (S12) based on a temperature measured by the thermostat installed in that room of the different rooms, in which the indoor unit of the at least two indoor units having the slowest responsiveness is installed, **characterized in that**
   a standard heat transport medium temperature is calculated in a first step as follows:

   a required heat transport medium temperature $T_{w,i}$ is calculated (S33) for each thermostat i as

   $$T_{w,i} = \alpha_i (T_{set,i} - T_a) + T_{dset,i}$$

   wherein

   $$\alpha_i = (T_{dw,i} - T_{dset,i})/( T_{dset,i} - T_{da})$$

   where

   $T_{dw,i}$ is a predefined design heat transport medium temperature of the indoor unit corresponding to thermostat i,
   $T_{dset,i}$ is a standard set room temperature,
   $T_{da}$ is a predetermined lowest ambient temperature, $T_{set,i}$ is a set room temperature and
   $T_a$ is an ambient temperature,
   and then in case of heating the rooms a maximum of the required heat transport medium temperatures $T_{w,i}$ and in case of cooling the rooms a minimum of the required heat transport medium temperatures $T_{w,i}$ is defined (S34) from all i as the standard heat transport medium temperature,
   wherein the standard heat transport medium temperature is adjusted (S35) in a later step based on a measurement by the thermostat installed **in that** room of the different rooms, in which the indoor unit of the at least two indoor units having the slowest responsiveness is installed,
   wherein the temperature of the heat transport medium is controlled (S12) to be the adjusted standard heat transport medium temperature.

2. Method according to the preceding claim, wherein the temperature of the heat transport medium is controlled by adapting an operation frequency of a heat pump heating or cooling the heat transport medium and/or an operation frequency of a circulation pump transporting the heat transport medium.

3. Method according to one of the preceding claims, wherein a memory stores the responsiveness of the indoor unit having the slowest responsiveness, and wherein the operation frequency of the heat pump heating or cooling the heat transport medium and/or the operation frequency of the circulation pump transporting the heat transport medium is controlled based on the responsiveness.

4. Method according to one of claims 2 or 3, wherein the operation frequency of the heat pump heating or cooling the heat transport medium and/or the operation frequency of the circulation pump transporting the heat transport medium are controlled using PI control.

5. Method according to one of the preceding claims,

   wherein the indoor unit having the slowest responsiveness is determined by measuring a temperature of the heat transport medium and a surface temperature of each of the indoor units at a plurality of times,
   calculating the responsiveness based on the measured temperatures of the heat transport medium and the surface temperatures of the indoor units and determine the indoor unit having the slowest responsiveness based on the calculated responsivenesses.

6. Method according to one of the preceding claims wherein the indoor units are heat emitters.

7. Method according to one of the preceding claims wherein the indoor units are coolers.

8. Method according to one of the preceding claims, wherein the indoor units are indoor units chosen from a set comprising radiator, floor heater and fan coil unit.

9. Hydronic heating system,

the hydronic heating system having at least two indoor units which are installed in different rooms, a thermostat being installed in each of the different rooms,
and further comprising a controller which is configured to control a temperature of a heat transport medium of the hydronic heating system based on a temperature measured by the thermostat installed in that room of the different rooms, in which the indoor unit of the at least two indoor units having the slowest responsiveness is installed,
wherein the controller is configured to carry out a method according to one of claims 1 to 8.

**Patentansprüche**

1. Verfahren zur Steuerung eines hydronischen Heizsystems,

wobei das hydronische Heizsystem mindestens zwei Inneneinheiten aufweist, die in verschiedenen Räumen installiert sind, wobei in jedem der verschiedenen Räume ein Thermostat installiert ist,
wobei
eine Temperatur eines Wärmetransportmediums des hydronischen Heizsystems auf Grundlage einer Temperatur gesteuert wird (S12), die von dem Thermostat gemessen wird, der in dem Raum der verschiedenen Räume installiert ist, in dem die Inneneinheit der mindestens zwei Inneneinheiten mit dem langsamsten Ansprechverhalten installiert ist, **dadurch gekennzeichnet, dass** eine Standardwärmetransportmediumtemperatur in einem ersten Schritt wie folgt berechnet wird:

für jeden Thermostat i wird eine erforderliche Wärmetransportmediumtemperatur $T_{w,i}$ berechnet (S33), wo

$$T_{w,i} = \alpha_i(T_{set,i} - T_a) + T_{dset,i}$$

wobei

$$\alpha_i = (T_{dw,i} - T_{dset,i})/(T_{dset,i} - T_{da})$$

wobei
$T_{dw,i}$ eine vordefinierte Wärmetransportmedium-Auslegungstemperatur der Inneneinheit ist, die zu dem Thermostat i gehört,
$T_{dset,i}$ eine Standardraumsolltemperatur ist,
$T_{da}$ eine vorbestimmte niedrigste Umgebungstemperatur ist,
$T_{set,i}$ eine Raumsolltemperatur ist und
$T_a$ eine Umgebungstemperatur ist,
und dann wird im Falle des Heizens der Räume ein Maximum der erforderlichen Wärmetransportmediumtemperaturen $T_{w,i}$ und im Falle des Kühlens der Räume ein Minimum der erforderlichen Wärmetransportmediumtemperaturen $T_{w,i}$ aus allen i als die Standardwärmetransportmediumtemperatur definiert (S34),
wobei die Standardwärmetransportmediumtemperatur in einem späteren Schritt auf Grundlage einer Messung durch den Thermostat angepasst wird (S35), der in demjenigen der verschiedenen Räume installiert ist, in dem die Inneneinheit der mindestens zwei Inneneinheiten mit dem langsamsten Ansprechverhalten installiert ist,
wobei die Temperatur des Wärmetransportmediums so gesteuert wird (S12), dass sie der angepassten Standardwärmetransportmediumtemperatur entspricht.

2. Verfahren nach dem vorhergehenden Anspruch, wobei die Temperatur des Wärmetransportmediums durch Anpassen einer Betriebsfrequenz einer das Wärmetransportmedium erwärmenden oder kühlenden Wärmepumpe und/oder einer Betriebsfrequenz einer das Wärmetransportmedium transportierenden Zirkulationspumpe gesteuert wird.

3. Verfahren nach einem der vorhergehenden Ansprüche, wobei in einem Speicher das Ansprechverhalten der Inneneinheit mit dem langsamsten Ansprechverhalten gespeichert wird und wobei die Betriebsfrequenz der Wärmepumpe, die das Wärmetransportmedium erwärmt oder kühlt, und/oder die Betriebsfrequenz der Zirkulationspumpe, die das Wärmetransportmedium transportiert, auf Grundlage des Ansprechverhaltens gesteuert wird.

**4.** Verfahren nach einem der Ansprüche 2 oder 3, wobei die Betriebsfrequenz der das Wärmetransportmedium erwärmenden oder kühlenden Wärmepumpe und/oder die Betriebsfrequenz der das Wärmetransportmedium transportierenden Zirkulationspumpe unter Verwendung eines PI-Reglers geregelt werden.

**5.** Verfahren nach einem der vorhergehenden Ansprüche, wobei die Inneneinheit mit dem langsamsten Ansprechverhalten bestimmt wird durch Messen einer Temperatur des Wärmetransportmediums und einer Oberflächentemperatur jeder der Inneneinheiten zu einer Vielzahl von Zeitpunkten, Berechnen des Ansprechverhaltens auf Grundlage der gemessenen Temperaturen des Wärmetransportmediums und der Oberflächentemperaturen der Inneneinheiten und Bestimmen der Inneneinheit mit dem langsamsten Ansprechverhalten auf Grundlage der berechneten Ansprechverhalten.

**6.** Verfahren nach einem der vorhergehenden Ansprüche, wobei die Inneneinheiten Wärmestrahler sind.

**7.** Verfahren nach einem der vorhergehenden Ansprüche, wobei die Inneneinheiten Kühler sind.

**8.** Verfahren nach einem der vorhergehenden Ansprüche, wobei die Inneneinheiten Inneneinheiten sind, die aus einer Menge ausgewählt werden, die einen Heizkörper, eine Bodenheizung und einen Gebläsekonvektor enthält.

**9.** Hydronisches Heizsystem,

wobei das hydronische Heizsystem mindestens zwei Inneneinheiten aufweist, die in verschiedenen Räumen installiert sind, wobei in jedem der verschiedenen Räume ein Thermostat installiert ist, und ferner eine Steuereinheit aufweist, die eingerichtet ist, eine Temperatur eines Wärmetransportmediums des hydronischen Heizsystems auf Grundlage einer Temperatur zu steuern, die von dem Thermostat gemessen wird, der in dem Raum der verschiedenen Räume installiert ist, in dem die Inneneinheit der mindestens zwei Inneneinheiten mit dem langsamsten Ansprechverhalten installiert ist, wobei die Steuereinheit eingerichtet ist, ein Verfahren nach einem der Ansprüche 1 bis 8 auszuführen.

**Revendications**

**1.** Procédé de contrôle d'un système de chauffage hydronique,

le système de chauffage hydronique ayant au moins deux unités intérieures qui sont installées dans différentes pièces, un thermostat étant installé dans chacune des différentes pièces, dans lequel une température d'un fluide caloporteur du système de chauffage hydronique est régulée (S12) sur la base d'une température mesurée par le thermostat installé dans cette pièce des différentes pièces, dans laquelle l'unité intérieure des au moins deux unités intérieures ayant la réactivité la plus lente est installée, **caractérisé en ce qu'**une température standard du fluide caloporteur est calculée dans une première étape comme suit :

une température requise du fluide caloporteur $T_{w,i}$ est calculée (S33) pour chaque thermostat i comme suit

$$T_{w,i} = \alpha_i \left(T_{set,i} - T_a\right) + T_{dset,i}$$

dans lequel

$$\alpha_i = \left(T_{dw,i} - T_{dset,i}\right) / \left(T_{dset,i} - T_{da}\right)$$

où
$T_{dw,i}$ est une température de conception prédéfinie du fluide caloporteur de l'unité intérieure correspondant au thermostat i,
$T_{dset,i}$ est une température de pièce définie standard,
$T_{da}$ est une température ambiante minimale prédéterminée,
$T_{set,i}$ est une température de pièce définie et $T_a$ est une température ambiante,
et ensuite, en cas de chauffage des pièces, un maximum des températures requises du fluide caloporteur $T_{w,i}$ et en cas de refroidissement des pièces, un minimum des températures requises du fluide caloporteur $T_{w,i}$ est défini (S34) à partir de tous les i comme la température standard du fluide caloporteur,

dans lequel la température standard du fluide caloporteur est ajustée (S35) dans une étape ultérieure sur la base d'une mesure par le thermostat installé dans cette pièce des différentes pièces, dans laquelle l'unité intérieure des au moins deux unités intérieures ayant la réactivité la plus lente est installée,

dans lequel la température du luide caloporteur est régulée (S12) pour être la température standard ajustée du fluide caloporteur.

2. Procédé selon la revendication précédente, dans lequel la température du fluide caloporteur est régulée en adaptant une fréquence de fonctionnement d'une pompe à chaleur chauffant ou refroidissant le fluide caloporteur et/ou une fréquence de fonctionnement d'une pompe de circulation transportant le fluide caloporteur.

3. Procédé selon l'une des revendications précédentes, dans lequel une mémoire stocke la réactivité de l'unité intérieure ayant la réactivité la plus lente, et dans lequel la fréquence de fonctionnement de la pompe à chaleur chauffant ou refroidissant le fluide caloporteur et/ou la fréquence de fonctionnement de la pompe de circulation transportant le fluide caloporteur est contrôlée sur la base de la réactivité.

4. Procédé selon l'une des revendications 2 ou 3, dans lequel la fréquence de fonctionnement de la pompe à chaleur chauffant ou refroidissant le fluide caloporteur et/ou la fréquence de fonctionnement de la pompe de circulation transportant le fluide caloporteur sont contrôlées par une commande PI.

5. Procédé selon l'une des revendications précédentes, dans lequel l'unité intérieure ayant la réactivité la plus lente est déterminée en mesurant une température du fluide caloporteur et une température de surface de chacune des unités intérieures à une pluralité de moments, en calculant la réactivité sur la base des températures mesurées du fluide caloporteur et des températures de surface des unités intérieures et en déterminant l'unité intérieure ayant la réactivité la plus lente sur la base des réactivités calculées.

6. Procédé selon l'une des revendications précédentes dans lequel les unités intérieures sont des émetteurs de chaleur.

7. Procédé selon l'une des revendications précédentes dans lequel les unités intérieures sont des refroidisseurs.

8. Procédé selon l'une des revendications précédentes, dans lequel les unités intérieures sont des unités intérieures choisies parmi un ensemble comprenant un radiateur, un chauffage par le sol et une unité de ventilo-convecteur.

9. Système de chauffage hydronique,

le système de chauffage hydronique ayant au moins deux unités intérieures qui sont installées dans différentes pièces, un thermostat étant installé dans chacune des différentes pièces, et comprenant en outre un contrôleur configuré pour réguler une température d'un fluide caloporteur du système de chauffage hydronique sur la base d'une température mesurée par le thermostat installé dans cette pièce des différentes pièces, dans laquelle l'unité intérieure des au moins deux unités intérieures ayant la réactivité la plus lente est installée, dans lequel le contrôleur est configuré pour exécuter un procédé selon l'une des revendications 1 à 8.

Start

S11 — Heating ON? — No

S12 — Controlling water temperature

S13 — Heating OFF? — No

End

Fig. 1

Water flow temperature

Emitter A

Emitter B

Emitter C

Emitter C has the slowest responsiveness of the change of the surface temperature

Temperature

Time

Fig. 2

EP 3 382 490 B1

EP 3 382 490 B1

Start

S31 — Heating ON? — No

Yes

S32 — The heating has started now or room set temperature changes — No

Yes

S33 — Required water temperature calculation

S34 — Taking the highest required water temperature

S35 — Adjusting the standard water temperature

S37 — Heating OFF? — No

Yes

End

Fig. 3

```
                    ┌──────────┐
                    │  Start   │
                    └────┬─────┘
                         │         ┌──────────────┐
                         ▼         │          No  │
      S41 ──────    ◇ Heating ON? ◇──────────────┘
                         │
                         ▼
              ┌─────────────────────────┐
      S42 ────│ Required water temperature
              │        calculation       │
              └─────────────────────────┘
                         │
                         ▼
              ┌─────────────────────────┐
      S43 ────│  Taking the highest required
              │      water temperature    │
              └─────────────────────────┘
                         │
                         ▼
              ┌─────────────────────────┐
      S44 ────│  Adjusting the standard water
              │        temperature        │
              └─────────────────────────┘
                         │
                         ▼              No
      S45 ──────    ◇ Heating OFF? ◇──────────
                         │
                         ▼
                    ┌──────────┐
                    │   End    │
                    └──────────┘
```

Fig. 4

| Lowest ambient temperature | | -3°C | |
| --- | --- | --- | --- |
| | Thermostat A (Room A, Emitter A) | Thermostat B | Thermostat C |
| Standard set room temperature | 21 | 19 | 19 |
| Design water temperature | 40 | 60 | 70 |
| Type of heat emitter | Fan coil unit | Radiator(Slowest) | Radiator |

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2466220 A1

- EP 2896895 A1